(19) Europäisches Patentamt
European Patent Office
Office européen des brevets

(11) **EP 1 972 603 A2**

(12) **EUROPEAN PATENT APPLICATION**

(43) Date of publication:
**24.09.2008 Bulletin 2008/39**

(51) Int Cl.:
***C04B 22/14*** *(2006.01)*       *C04B 103/12* *(2006.01)*

(21) Application number: **07380276.1**

(22) Date of filing: **16.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **27.02.2007 ES 200700508**

(71) Applicant: **Industrias Quimicas del Ebro, S.A.
50016 Zaragoza (ES)**

(72) Inventors:
• **Rueda Alba, Angel Julian**
  **50016 Zaragoza (ES)**
• **Perez Cacho, Jorge**
  **50016 Zaragoza (ES)**
• **Villarroya Greschuhna, Eduardo**
  **50016 Zaragoza (ES)**

(74) Representative: **Ungria Lopez, Javier et al
c/o UNGRIA Patentes y Marcas, S.A.,
Avda. Ramon y Cajal, 78
28043 Madrid (ES)**

(54) **Method of preparation of a solid setting accelerant product, product obtained and use thereof**

(57)     Method of preparation of a solid accelerant product for setting in the solid state, free of alkaline metals and chlorides, easily soluble in water at room temperature in order to provide solutions with a high concentration in $Al_2O_3$; said solutions being able to be used as liquid setting accelerants for the hardening of cement mixtures (mortar and concrete) ensuring a rapid development of compressive strength at early ages.

The solid setting accelerant contains a polyanionic aluminium complex of formula $[Al(OH)_a(SO_4)_bX_c(H_2O)_d]$ where a = 1-3; b = 0-1, c = 0-0.5, d = 0-4 and X = DEA, TEA.

EP 1 972 603 A2

## Description

### OBJECT OF THE INVENTION

As stated in the title of this descriptive specification, the present invention relates to a method of preparation of a solid setting accelerant product, in such a way that, by means of the method that is presented and starting from an alkaline accelerant, an alkali-free solid setting accelerant is obtained.

Moreover, the solid setting accelerant product is easily soluble in water at room temperature in order to give solutions with a high concentration of $Al_2O_3$.

Said solutions can be used as liquid setting accelerants for the hardening of cement mixtures (mortar and concrete) ensuring a rapid development of compressive strength at early ages.

### FIELD OF APPLICATION

The present invention describes a method of preparation of a solid setting accelerant product, free of alkaline metals and chlorides, easily soluble in water at room temperature in order to give solutions with a high concentration of $Al_2O_3$.

Said solutions can be used as liquid setting accelerants for the hardening of cement mixtures (mortar and concrete) ensuring a rapid development of compressive strength at early ages.

### PRIOR ART OF THE INVENTION

Alkali-free accelerants existing on the market today are primarily based on the reaction of a solution of aluminium sulphate and a highly reactive amorphous aluminium hydroxide.

Nevertheless, one of the main problems presented by these latest generations of alkali-free liquid accelerants is that of stability during their storage.

So, these concentrated solutions of $Al_2O_3$ tend to become destabilised with time. The destabilisation takes place in two different ways: due to an increase in viscosity up to gellification or due to crystallisation of different complex salts of aluminium. For example, traces of sodium ($Na^+$) in those solutions can give rise to crystalline species of the kind Natroalunite $NaAl_3(SO_4)_2(OH)_6$, which act as nucleating agents for other hydrated crystalline species of aluminium hydroxysulphate.

This technical problem has been solved by the use of different kinds of stabilisers of different natures.

Among the stabilisers used can be listed polycarboxylic organic acids and inorganic acids.

For example, patent WO 98/18740 described the use of organic carboxylic acids. Among the organic acids described in that patent are the following: formic acid, citric acid, lactic acid, oxalic acid, etc.

Patent WO 01/42165 describes the use of inorganic acids as stabilisers and in particular phosphoric acid; patent WO 2004/046059 again describes the use of inorganic stabilisers such as phosphoric acid or boric acid.

In addition to organic and inorganic acids, there exists another family of substances that can be used as stabilisers of aluminium in aqueous solution. Water soluble amines, among which are included alkanolamines (ethanolamine - DEAH2, triethanolamine - TEAH3) can, under gentle conditions, react with reactive aluminium hydroxides of an amorphous nature in order to give alumatranes which complex with the aluminium ion favouring its stability in solution.

The synthesis of this type of aluminium complex has been described in the literature (J. Pinkas and J. G. Verkade, Inorg. Chem. 1993, 32, 2711; R. M. Lain, D. R. Treadwell, B. L. Mueller, C. R. Bickmore, K. F. Waldner and T. R. Hinklin; J. Mater. Chem. 1996, 6, 1441) starting from crystalline aluminium oxides and hydroxides and under more aggressive working conditions owing to the low level of reactivity shown by those crystalline aluminium oxides/hydroxides.

In some cases, in particular when certain inorganic acids are used in the production of alkali-free accelerants, the development of strength during the setting process of the cement mixtures in which they have been used as hardeners can undergo major delays or become suddenly halted.

In short, the alkali-free setting accelerants that are described are presented in the liquid state and require a stabiliser.

### DESCRIPTION OF THE INVENTION

The present invention describes a method of preparation of a solid setting accelerant product, being of the type of product used as setting accelerant, in such a way that the method of preparation of said setting accelerant is based on the following stages:

- on an aqueous solution of sodium carbonate, with a concentration of between 1 and 40 % $Na_2CO_3$, a complex species of aluminium hydroxycarbonatesulphate is precipitated by reaction of an aqueous solution of aluminium sulphate with a concentration of between 1 and 12 % $Al_2O_3$ and a solution of sodium aluminate, with a concentration of between 1 and 40 % $Al_2O_3$, being able to vary the pH of the reaction between 2 and 13, the temperature between 1 and 90 °C and the reaction time between 1 minute and 10 hours;

- the species generated *in situ* in the first stage is filtered and washed to eliminate alkaline metal impurities;

- the species generated in the second stage is made to react with the same solution of aluminium sulphate of the first stage, obtaining a solution with a concentration of $Al_2O_3$ of between 8 and 20 %, the reaction being carried out at a temperature of between 15 and 90 °C, and;

- in a final stage the product in aqueous solution, obtained in the previous stage, will be evaporated to dryness using different means of drying and drying temperatures of between 120 °C and 600 °C for the incoming air and between 95 °C and 200 °C for the outgoing air.

Likewise, the aqueous solution of sodium carbonate of the first stage can be replaced by a sodium hydrogencarbonate.

Equally, the reagents of the first stage can be added maintaining their flows fixed or variable.

So, the method is based on the use of an alkaline liquid setting accelerant (sodium aluminate) as base raw material.

Moreover, starting from aluminium sulphate and sodium aluminate as main reagents, a polyanionic aluminium complex is obtained.

Likewise, starting from an alkaline liquid setting accelerant, a setting accelerant is obtained that is free of alkaline metal.

The setting accelerant obtained in the solid state contains a polyanionic aluminium complex of formula $[Al(OH)_a(SO_4)_b(X)_c(H_2O)_d]$ where

- a lies between 1 and 3, preferably 2.3;
- b lies between 0 and 1, preferably 0.3;
- c lies between 0 and 0.5, preferably 0.1;
- d lies between 0 and 4, preferably 2.5, and;
- X = DEA, TEA comes from the condensation reaction of hydroxide groups of alkanolamine (DEAH2, TEAH3). The reaction would be of the type:

$$DEAH2 + Al(OH)_3 \rightarrow (OH)Al(O)_2DEA + 2\ H_2O$$

The alkali-free solid setting accelerant is the precursor of the liquid setting accelerant.

Likewise, the solid setting accelerant is easily soluble in water, at any temperature, in order to give solutions of aluminium that are stable in time.

The solid setting accelerant contains a polyanionic aluminium complex.

The solid setting accelerant forming the inventive object displays very good stability during storage and alkali-free liquid accelerants can be prepared starting from it which also enjoy high stability. This fact means that no stabilising additives (especially inorganic acids) are used during the production process, which would exert a later negative influence on the development of mechanical compressive and/or tensile strengths.

EXAMPLES OF PREPARATION

Example 1:

To a solution of 31 g of sodium carbonate (99.95% in $Na_2CO_3$) in 500 g of water is added in a first stage, and with constant stirring, variable quantities of aluminium sulphate (8.3 % solution of $Al_2O_3$) 500 g in total, and sodium aluminate (24 % solution in $Al_2O_3$) type ALNA® 73 (Industrias Quimicas del Ebro, S. A.) 53 g in total. The reaction takes place for 1 hour at a temperature of 50 °C.

In a second stage the suspension obtained is filtered and washed, in order to then be treated with the rest of the aluminium sulphate, up to 500 g, not added in stage 1 (8.3 % solution of $Al_2O_3$).

The resulting solution is evaporated to dryness in a laboratory atomiser in order to give a powder product easily soluble in water.

Example 2:

To a solution of 22 g of sodium hydrogencarbonate (99.95% in $NaHCO_3$) in 410 g of water is added in a first stage, and with constant stirring, variable quantities of aluminium sulphate (8.3 % solution of $Al_2O_3$) 450 g in total, and sodium aluminate (24 % solution in $Al_2O_3$) type ALNA® 73 (Industrias Quimicas del Ebro, S. A.) 48 g in total. The reaction takes place for 1 hour at a temperature of 50 °C.

In a second stage the suspension obtained is filtered and washed, in order to then be treated with the rest of the aluminium sulphate, up to 450 g, not added in stage 1 (8.3 % solution of $Al_2O_3$).

The resulting solution is evaporated to dryness in a laboratory atomiser in order to give a powder product easily soluble in water.

Example 3:

To a solution of 22 g of sodium hydrogencarbonate (99.95% in $NaHCO_3$) in 410 g of water is added in a first stage, and with constant stirring, variable quantities of aluminium sulphate (8.3 % solution of $Al_2O_3$) 450 g in total, and sodium aluminate (24 % solution in $Al_2O_3$) type ALNA® 73 (Industrias Quimicas del Ebro, S. A.) 48 g in total. The reaction takes place for 1 hour at a temperature of 50 °C, maintaining a constant pH of 10 in the reaction bed.

In a second stage the suspension obtained is filtered and washed, in order to then be treated with the rest of the aluminium sulphate, 115 g, not added in stage 1 (8.3 % solution of $Al_2O_3$). The resulting solution is evaporated to dryness in a laboratory atomiser in order to give a powder product easily soluble in water.

Example 4:

To a solution of 45 g of sodium carbonate (99.95% in $Na_2CO_3$) in 1000 g of water is added in a first stage, and with constant stirring, variable quantities of aluminium sulphate (8.3 % solution of $Al_2O_3$) 400 g in total, and sodium aluminate (24 % solution in $Al_2O_3$) type ALNA® 73 (Industrias Quimicas del Ebro, S. A.) 225 g in total. The reaction takes place for 2 hours at a temperature of 30 °C.

In a second stage the suspension obtained is filtered and washed, in order to then be treated with aluminium sulphate (8.3 % solution of $Al_2O_3$), 1200 g, and an amine or combination of amines of the alkanolamine type (diethanolamine, triethanolamine, etc.) at 6 % by weight of the total.

The resulting solution is evaporated to dryness in a laboratory atomiser in order to a powder product easily soluble in water.

**Claims**

1. METHOD OF PREPARATION OF A SOLID SETTING ACCELERANT PRODUCT, being of the type of product used as setting accelerant, **characterised in that** the method of preparation of a setting accelerant is based on the following stages:

    - on an aqueous solution of sodium carbonate, with a concentration of between 1 and 40 % $Na_2CO_3$, a complex species of aluminium hydroxycarbonatesulphate is precipitated by reaction of an aqueous solution of aluminium sulphate with a concentration of between 1 and 12 % $Al_2O_3$ and a solution of sodium aluminate, with a concentration of between 1 and 40 % $Al_2O_3$, being able to vary the pH of the reaction between 2 and 13, the temperature between 1 and 90 °C and the reaction time between 1 minute and 10 hours;
    - the species generated *in situ* in the first stage is filtered and washed to eliminate alkaline metal impurities;
    - the species generated in the second stage is made to react with the same solution of aluminium sulphate of the first stage, obtaining a solution with a concentration of $Al_2O_3$ of between 4 and 20 %, the reaction being carried out at a temperature of between 25 and 90 °C, and;
    - in a final stage the product in aqueous solution, obtained in the previous stage, will be evaporated to dryness using different means of drying.

2. METHOD OF PREPARATION OF A SOLID SETTING ACCELERANT PRODUCT, according to claim 1, **characterised in that** the aqueous solution of sodium carbonate of the first stage can be replaced by that of a sodium hydrogencarbonate.

3. METHOD OF PREPARATION OF A SOLID SETTING ACCELERANT PRODUCT, according to claim 1, **characterised in that** the reagents of the first stage can be added maintaining their flows fixed or variable.

4. METHOD OF PREPARATION OF A SOLID SETTING ACCELERANT PRODUCT, according to claim 1, **characterised in that** the method is based on the use of an alkaline liquid setting accelerant (sodium aluminate) as base raw material.

5. METHOD OF PREPARATION OF A SOLID SETTING ACCELERANT PRODUCT, according to claim 1, **characterised in that**, starting from aluminium sulphate and sodium aluminate as main reagents, a complex of polyanionic aluminium hydroxysulphate is obtained.

6. METHOD OF PREPARATION OF A SOLID SETTING ACCELERANT PRODUCT, according to claim 1, **characterised in that**, starting from an alkaline liquid setting accelerant, a setting accelerant is obtained that is free of alkaline metal.

7. PRODUCT obtained according the method of claims 1 to 6, **characterised in that** the setting accelerant obtained in the solid state contains a polyanionic complex of formula $[Al(OH)_a(SO_4)_b(X)_c(H_2O)_d]$ where

    - a lies between 1 and 3, preferably 2.3;
    - b lies between 0 and 1, preferably 0.3;
    - c lies between 0 and 0.5, preferably 0.1;
    - d lies between 0 and 4, preferably 2.5, and;
    - X = DEA, TEA comes from the total or partial condensation reaction of alkanolamine (DEAH2, TEAH3, etc.) with the species of aluminium hydroxysulphatecarbonate.

8. PRODUCT obtained according to claim 7, **characterised in that** the alkali-free solid setting accelerant is the precursor of the alkali-free liquid setting accelerant.

9. PRODUCT obtained according to claim 7, **characterised in that** the solid setting accelerant is easily soluble in water, at any temperature, in order to give solutions of aluminium that are stable in time.

10. PRODUCT obtained according to claim 7, **characterised in that** the solid setting accelerant contains a polyanionic aluminium complex.

11. USE of the product or of its solutions according to claims 7 to 10, as setting accelerant for concrete and

**EP 1 972 603 A2**

mortar.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9818740 A
- WO 0142165 A
- WO 2004046059 A

**Non-patent literature cited in the description**

- **J. PINKAS ; J. G. VERKADE.** *Inorg. Chem.,* 1993, vol. 32, 2711
- **R. M. LAIN ; D. R. TREADWELL ; B. L. MUELLER ; C. R. BICKMORE ; K. F. WALDNER ; T. R. HINKLIN.** *J. Mater. Chem.,* 1996, vol. 6, 1441